# EUROPEAN PATENT APPLICATION

(11) **EP 2 763 425 A1**
(43) Date of publication of application: **06.08.2014**
(21) Application number: 13166175.3
(22) Date of filing: 02.05.2013
(51) Int. Cl.: H04N 21/4363

(54) **Method for transferring data from a USB video camera to a host**

(30) Priority: 04.02.2013 SG 201300863
(71) Applicant: Leica Instruments (Singapore) Pte. Ltd., 608924 Singapore (SG)
(72) Inventor: Ma, Peng, 642654 Singapore (SG); Zou, Qingsong, 610325 Singapore (SG)
(74) Representative: Kudlek & Grunert Patentanwälte

(57) **Abstract**

The present invention relates to a method for transferring data between a USB camera (20) and a host (10) over a bulk pipe of a USB connection (30), wherein a first type of data is transferred in a first format, and a second type of data is transferred in a second format, the first format being a file format, and the second format comprising messages which are provided with headers in such a way that the second type of data can be differentiated from the first type of data by the host (10) and/or by the USB camera (20).

## Description

### Field of the invention

The present invention relates to a method for transferring data from a USB video camera to a host.

### Background of the Invention

Typical USB video cameras (as well as the corresponding USB connections) comprise one control pipe and two bulk pipes. Vendor commands are delivered via the control pipe, whereas other data blocks (bulk data) are delivered via the bulk pipes. One of the bulk pipes is used for upstream data transfer, i.e. from the USB video camera to the host, the other bulk pipe for downstream data transfer. When the USB camera is streaming video data, typically Motion-JPEG (MJPEG) data, the upstream bulk pipe (i.e. from the USB video camera to the host, typically a personal computer) is dedicatedly occupied by MJPEG video data. In this situation, upstream transfer of other data, such as user data, is only possible after the video is stopped, and the upstream pipe is released.

There is especially a requirement for the current COACH @ (Camera On A CHip) platform. COACH @ is a registered trade mark of ZORAN CORPORATION, and COACH @ digital camera processors are SOC solutions for digital cameras. COACH @ processors power digital camera brands from the world's leading camera manufactures. Cameras equipped with such digital camera processors shall to be able to communicate user-defined messages to and from a PC. The COACH @ platform communicates with PC through its vendor defined command sets, and its low level USB framework is not accessible by users. Therefore, any communication, especially potential USB tunnelling, must be done through existing platforms and protocols.

Currently, cameras using such a COACH @ processor or a processor of this or a similar type camera have a typical USB interface with one configuration only. It has one default control pipe and two USB data pipes (bulk pipes, as mentioned above). While the control pipe is used to communicate vendor defined command sets, the two bulk pipes allow bi-directional bulk transfer between host (PC) and camera. Tunnelling when the camera is streaming video data is significantly more challenging, as there is only one data channel in each direction. As mentioned, for general operation of this category of video cameras, the video streaming has to be stopped before the transfer of other data (user data) can start.

US 2005/0262262 A1 discloses a method of transferring bulk and control data from a first device to a second device over a USB bus. This method comprises storing transfer descriptors, each including a transfer descriptor header and payload data, in a buffer memory in the first device.

US 7,349,391 B2 discloses a system comprising a network, a bus and an interface coupling the network to the bus. The host is coupled to the network and executes software to generate packets for communication on the network. A bus device is coupled to the bus. The interface and host coordinate to transport bus device packets between the host and the bus device via tunnelling over the network.

The present invention seeks to enable simultaneous stream transfer of user data, even while MJPEG video data is being streamed between a USB video camera and a personal computer.

According to the invention, a method comprising the features of claim 1 is suggested.

With the invention, it is possible to transfer user data from a USB video camera to a host, e.g. a personal computer, even while MJPEG video data are being streamed. When such mixed data, i.e. comprising a first type of data (MJPEG video data) and a second type of data (for example user data), is received by the host, expediently a USB camera driver (for example implemented in a host controller) can be utilized to separate the two types of data which are simultaneously being streamed, and deliver them to respective different higher layer data consumers.

By providing the second type of data (user data) with expediently designed headers, such a differentiation can be effected in a highly efficient way. The method according to the invention especially makes possible a bi-directional communication, regardless of whether MJPEG video streaming is occurring or not.

Advantageous embodiments are the subject-matter of the dependent claims.

Expediently, the host, with which the USB video camera communicates, is a personal computer.

The invention is especially effective when using a video format, especially Motion-JPEG (MJPEG), as the first format.

According to an especially preferred embodiment of the method according to the invention, the headers of messages of the second format comprise at least four consecutive 0xFF flag bytes (OxFFFFFFFF). JPEG data or MJPEG data will never contain four consecutive 0xFF bytes, so that such a specific flag header may for example be used by the USB camera driver in the host to differentiate user messages and separate them from the video stream. Such a header is not necessary for downstream messages (i.e. from the host to the USB video camera), as a downstream pipe (the second bulk pipe) is still available, even when video data is being streamed.

The method according to the invention is especially useful in case messages of the second format are user messages and/or control messagesThe message payload can be any data that is of interest to the host and/or the camera. E.g., this invention is useful to read camera settings data or transfer a file to a PC when video streaming is on. These data need be delivered via the bulk pipe. Therefore this invention enables the host to receive these data without having to stop video streaming..

Preferably, a USB camera firmware transmits data of the second format, when it does not delay the frame rate of the system. In this connection, the camera and/or the host can be provided with means for determining such times or time periods, when no delay of the frame rate of the system is to be expected.

Correspondingly, it is advantageous to ensure that the camera firmware transmits data of the second format when it does note rake or interrupt the data transmitted with the first format.

Further advantages and embodiments of the invention will become apparent from the description and the appended figures.

It should be noted that the previously mentioned features and the features to be further described in the following are usable not only in the respectively indicated combination, but also in further combinations or taken alone, without departing from the scope of the present invention.

In the drawings:
- Figure 1: is a schematic diagram of a host and a USB video camera operating in accordance with the present invention, and
- Figure 2: illustrates preferred formats, in which data may be transmitted according to the invention.

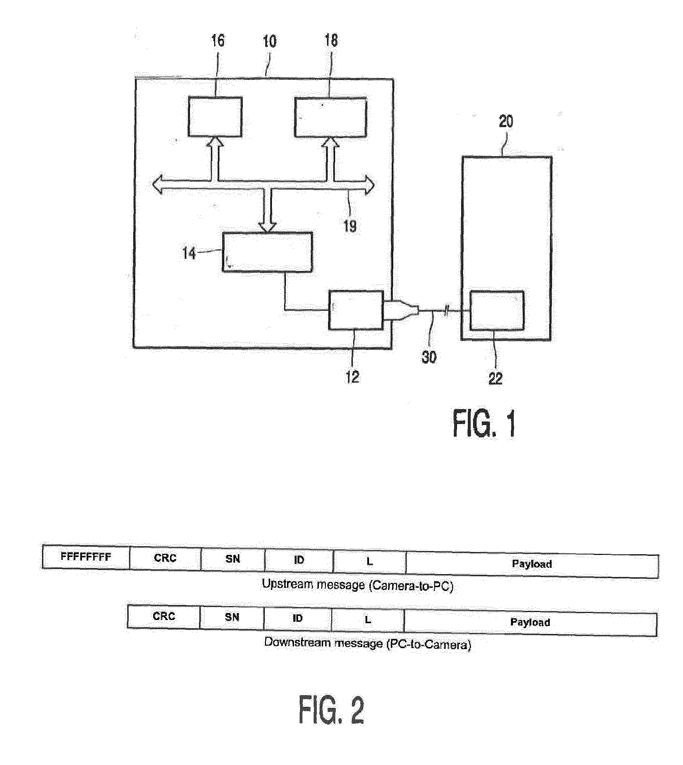

Figure 1 is a schematic diagram of a system, with which the method according to the invention can be performed. Herein, a USB host 10, which may for example be a personal computer (PC), personal digital assistant (PDA), or any other suitable electronic equipment, is in communication with a USB video camera 20 by means of a universal serial bus (USB) 30.

The host 10 and the USB video camera 20 have respective USB interface circuits 12, 22.

Transmissions over the bus 30 can for example be controlled by means of a host, namely a host controller 14. The host controller expediently comprises a USB kernel driver. Within the host 10, there is provided a microprocessor 16 and an associated system memory 18, and the host controller 14 is connected thereto by means of a microprocessor bus 19.

The USB bus (USB connection) 30 comprises one control pipe and two data pipes (upstream and downstream bulk pipes). Vendor commands and replies are delivered via the control pipe, whereas other data blocks are transferred via the bulk pipes. For example, video data and camera-to-pc file transfer are delivered via the upstream bulk pipe, and pc-to-camera file transfer is via the downstream bulk pipe.

According to the invention, it is possible to communicate/transfer non-MJPEG bulk data simultaneously to the MJPEG data over the upstream bulk pipe, by providing means for differentiation of such non-MJPEG data from MJPEG data.

The invention utilizes the fact that for MJPEG video data, video frames are transferred independently, and each frame is a stand-alone JPEG image. JPEG images can be provided with headers, or not, depending on specific means or circumstanced. For example, the camera can choose whether to send a header or not. The camera may send the header with the first JPEG frame only, e.g. to reduce redundancy. Even if a header is included in the MJPEG frames, specific headers reserved for the second format, e.g. such as 0xFFFFFFFF (see below) will not appear in MJPEG data, so that according to the invention the two types of data (i.e. the two different data formats) can always be differentiated..

In order to be able to effectively communicate user data, for example self-defined messages, between the USB video camera 20 and the host 10, the invention, according to a preferred embodiment, suggests adding a specific header, preferably four consecutive 0xFF flag bytes, to the header of such non-MJPEG data, especially user messages, which can be transferred simultaneously with MJPEG video data. Since JPEG or MJPEG data will never contain such four consecutive 0xFF flag bytes, this specific flag header enables the controller 14 (driver) provided in the host 10 to differentiate user messages and separate them from the video stream (MJPEG stream).

In Figure 2, a preferred format of such messages is shown. In the upper line of Figure 2, a preferred upstream message (i.e. USB video camera to host) is shown. It includes four consecutive 0xFF flag bytes, i.e. an 0xFFFFFFFF header before its actual message body. As follows from the lower line of Figure 2, which shows the message format for downstream messages, such a header (0xFFFFFFFF) is not necessary for downstream messages, since the downstream bulk pipe of the USB bus is available even when video streaming is on. Apart from the 0xFFFFFFFF header, the message format can be identical.

For completeness sake, the remaining fields of these messages can be chosen as follows:
CRC: 16 Bit cyclic redundancy check value for data validation,
SN: Globally unique serial number in order to avoid duplication,
Source/DestID: Command identifier to route messages,
Length: Payload length following this field,
Data package: Payload data, which may contain multiple user defined sub-messages.

The following communication details are provided, in order to further appreciate the invention:

The USB video camera 20 will typically create two buffers of a predefined length during initialisation for the host 10 to read and write. For writing, a host camera driver (e.g. implemented in the host controller) will set up memory access and write directly to the buffer address to be written. A command will then be set via the control channel of the USB bus 30 to notify the firmware to start processing the new data. When the USB video camera has any data to send, it will expediently fill the message body behind the 0xFFFFFFFF header. The high level user application is responsible to read the buffer whenever necessary, or periodically. When a new data package is received by the host driver, it checks if the 0xFFFFFFFF header is present in the data. If 0xFFFFFFFF is detected, it will deliver this package as user data. Otherwise, the package will be delivered as video data, preferably MJPEG data.

Be it noted that the size of a receiving I/O buffer (i.e. the buffer supplied to USB driver stack) on the host may affect how a MJPEG video frame is sent by the camera firmware. If the camera firmware can manage the USB data transmission on the camera platform, the MJPEG data and user data can be delivered in the right manner. However with a closed camera platform like COACH ®, where the transmission of USB data is out of the control of a user, if a buffer is not large enough to receive a full MJPEG frame in a single USB I/O operation, the video frame may be broken if a user message is to be read before a full frame is sent. For this reason, an I/O buffer that is large enough to receive a full frame may be required. For a typical video resolution of for example 1600x1200, this will approximately be 512 KB.

When using the invention, typical times required for sending and receiving a user message vary depending on how the camera firmware manages the transmission of the two types of data. With appropriate channel control, the firmware can balance the transmission of each type of data, and the user data can be delivered to the host in timely manner without impacting the frame rate of the video. If the firmware can only transmit user data after a full MJPEG frame is sent, the latency will vary depending on the exposure settings, as well as the video resolution.

Advantageously, caching on both sides of the USB bus 30 shall be implemented to simulate a high layer protocol (e.g. serial communication) and improve transfer efficiency.

## Claims

1. Method for transferring data between a USB camera (20) and a host (10) over a bulk pipe of a USB connection (30), wherein a first type of data is transferred in a first format, and a second type of data is transferred in a second format, the first format being a file format, and the second format comprising messages which are provided with headers in such a way that the second type of data can be differentiated from the first type of data by the host (10) and/or by the USB camera (20).

2. Method according to claim 1, wherein the host (10) is a personal computer (PC), a personal digital assistant (PDA) or any other suitable electronic equipment.

3. Method according to claim 1 or claim 2, wherein the first format is a video format.

4. Method according to any one of the preceding claims, wherein the first format is Motion-JPEG (MJPEG).

5. Method according to any one of the preceding claims, wherein the headers of the messages of the second format comprise at least four consecutive 0xFF flag bytes.

6. Method according to any one of the preceding claims, wherein the messages of the second format are user messages.

7. Method according to any one of the preceding claims, wherein the messages of the second format are control messages.

8. Method according to any one of the preceding claims, wherein the camera firmware transmits data of the second format when it does not delay the frame rate of the system.

9. Method according to any one of the preceding claims, wherein the camera firmware transmits data of the second format when it does not break or interrupt the data transmitted with the first format.
